# EUROPEAN PATENT APPLICATION

(11) **EP 0 994 623 A2**
(43) Date of publication of application: **19.04.2000**
(21) Application number: 99830645.0
(22) Date of filing: 13.10.1999
(51) Int. Cl.: H04N 7/10, H04N 7/20, H04H 1/00

(54) **System for distributing satellite television signals**

(30) Priority: 15.10.1998 IT FI980224
(71) Applicant: Telemedia S.R.L., 51031 Agliana (Pistoia) (IT)
(72) Inventor: Gori, Samuele, 51100 Pistoia (IT)
(74) Representative: Martini, Lazzaro

(57) **Abstract**

The present invention refers to a system for distributing satellite television signals within a central plant which provides for coding the signals outputted from a plurality of satellite receivers (SR) and deconding same signals by means of a plurality of peripheral control units (PU) linked to a distribution network (R) in correspondence of the various users (H); the system also uses the distribution network (R) to transmit telephone signals by linking at least one of the users (H) to a telephone network.

## Description

The present invention refers to a system for distributing satellite television signals, especially intended for equipping central plants of a type so-called "remote-tuning single-cable".

It is known that collective plants for the distribution of satellite television signals are generally classified as "single-cable" or " multi-cable" type, according to the number of cables used for the distribution of signals to the various users: the plants of single-cable type exhibiting only one lead-in cable for distributing the signals to the users, whereas the plants of multi-cable type use more cables for distributing the signals over a plurality of corresponding lines or columns each of which is connected to a preset number of users.

Typically, the single-cable plants for the distribution of satellite signals are classified as AM re-modulation, remote control AM re-modulation, IF-S conversion, QPSK-QAM intermodulation and IF-IF conversion type.

In particular, the remote control AM re-modulation plants comprises, for each user, a receiving module located in proximity of the antenna and provided with a modulator able to amplitude-modulate the satellite signals, so that such signals take up a format compatible with the common TV-sets and video recorders sited at the various users, and a local telecontrols repeater located at the site of each user. Said local repeater is intended to receive the commands given by the user by means of a corresponding hand-held control and to transmit the thus given commands to the respective reception module. The said commands are fed, via the supply mains, to a control box which is connected with all the receiving modules of the plant.

One of the main drawbacks related to the use of this system for the distribution of satellite television signals lies in the fact that the signals arriving at any of the users are in a format which allows a cleared [non cipher] vision thereof also by all the other users being connected to the distribution cable, which, besides being contrary to each person's will to maintain the privacy over the TV programs each time selected, prevents said format from being adopted for the distribution of coded, that is, for-payment transmissions. A further drawback consists in the impossibility by each of the user to impart commands on a telephone line and, thus, of utilizing so-called "pay per view" and "video on demand" services.

In addition to this, there is the fact that each user is obliged to use a standard, that is, an equal-for-all receiver module, without the possibility of choosing among those available on the market.

The present invention relates to the field of the systems for remote control, single-cable central plants, and its main object is to overcome the above said drawbacks.

This result has been achieved, according to the invention, by providing an apparatus, a plant and a method having the characteristics disclosed in the independent claims. Further characteristics being set forth in the dependent claims.

The advantages deriving from the present invention lie essentially in that it is possible to ensure the full privacy protection over the television signals selected by each user; that it is possible to distribute also signals relevant to coded, that is, for-payment transmissions; that it is possible to use the same distribution cable linked to the earth antenna; that the users have the maximum freedom in choosing their own satellite receiver, whether it is of analog or digital type; that a plant based on a distribution system according to the invention is relatively simple to make, cost-effective and reliable even after a prolonged service time.

These and other advantages and characteristics of the invention will be best understood by anyone skilled in the art from a reading of the following description in conjunction with the attached drawings given as a practical exemplification of the invention, but not to be considered in a limitative sense, wherein:
- Fig. 1 shows a simplified block diagram of a central plant for the distribution of satellite signals according to the invention;
- Fig. 2 shows a simplified block diagram of the top group of the plant of Fig. 1;
- Fig. 3 shows a simplified block diagram of the system in correspondence of any of the users;
- Fig. 4 shows an electric diagram relevant to a possible embodiment of a central control unit located in correspondence of the top group represented in Fig. 2.

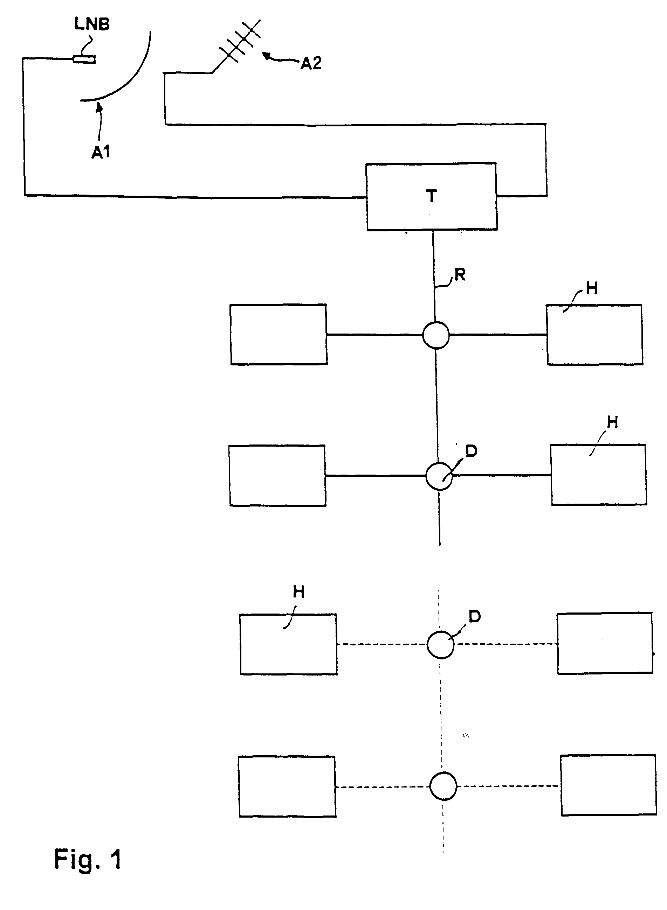

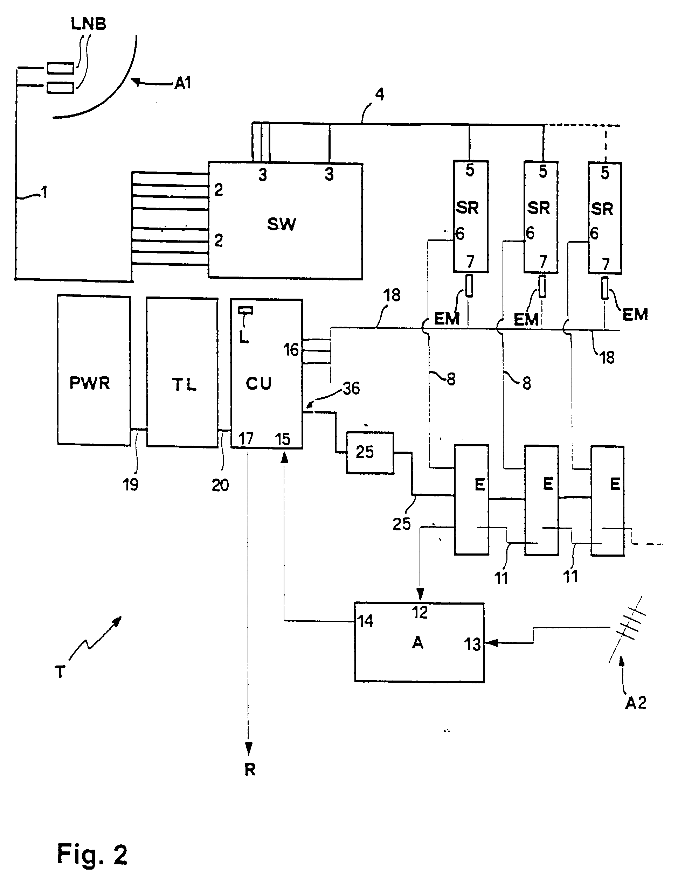

Broadly outlined in Fig. 1 is a central satellite reception plant comprising one or more antennae (A1, A2), a top terminal (T), a distribution network (R) and a series of audiovisual terminals (H), connected to the Network (R) via relevant derivation elements (D). The distribution network (R) consists of a coaxial cable for low-frequency television broadcasting, that is, of a type which is commonly provided on existing plants.
In the example of Fig. 1, the details of which are shown in the other figures, two antennae (A1) and (A2) are provided which are intended, respectively, for the reception of satellite and earth signals. The satellite parabolic antenna (A1), exemplarily represented in Fig. 2, is of "dual feed type" and provided with two converters (LNB) able to amplify and convert the frequency of the television signals, arriving from two satellites onto the parable (A1), into signals at intermediate frequency (IF).

The converters (LNB) are connected, on output, to the top terminal (T) schematically represented by a block in Fig. 1 and illustrated in greater details in Fig. 2. In particular, owing to the "dual feed-type antenna, eight cables (1) branch out from the converters (LNB) which are connected to relevant inputs (2) provided on a shunt or switch (SW). The switch (SW) exhibits a series of outputs (3) to which more cables (4) are connected.
The cables (4) are connected to a plurality of satellite receivers (SR), one receiver for each user. The satellite receiver (SR) are of known type and may consist, in practice, of satellite receivers available on the market and of a type commonly used in individual plants. The receivers may be provided with pay-TV readers of so-called "smart card" type, the card readers being possibly also of multipurpose type able to switch between cards of different type.

Referring now to Fig. 2, the satellite receivers (SR) exhibit, besides the input (5) through which they connect to switch (SW), an IR output (6) and an IR input (7). Each of the satellite receivers (SR) is connected - through the output (6) and, for example, a cable with SCART terminals - to a corresponding encoder-modulator device (E) which is able to act as a means for coding the received signal.
The encoder-modulators (E), which are interlinked by leads (11), are provided with an input (9) connected to respective satellite receivers (SR), and an output (10) connected to a first input (12) of an amplifier (A). The amplifier (A), in addition to the first input (12) for the signals arriving from the encoders (E), exhibits a second input (13) and an output (14). The second input (13) is intended for television signals of earth type and is, therefore, connected to the antenna (A2). The output (14) is connected to a first input (15) of a main control unit (CU) which is provided with a first output (17) connected to the distribution network (R), a second output (36) connected to the encoders-modulators (E), and a series of outputs (16) connected to a screened cable (18). The cable (18) connects the series of outputs (16) to a corresponding series of signal-emitting devices (EM) of IR type, for example, disposed and acting in correspondence of each of said satellite receivers (SR) and able to emulate, in practice, the specific telecontrol signal of each satellite receiver (SR). The main control unit (CU) may consist of more sections, one for each satellite receiver (SR). Again, in this embodiment, the connection to audiovisual terminals (H) is to be provided by the network (R). The main control unit (CU) is connected to the encoders (E) via a dedicated connection (25) made up, for example, of a printed circuit, in order to operate the same encoders in a manner to be described later on.
The main control unit (CU) is provided with a safety switch (L) which can be activated upon the installation of the plant or when making modifications thereto. Moreover, the central unit (CU) is connected to a main telephone interface (YL) and to electric supply means (PWR); the connection being schematically represented in Fig. 2 by the segments (19) and (20).

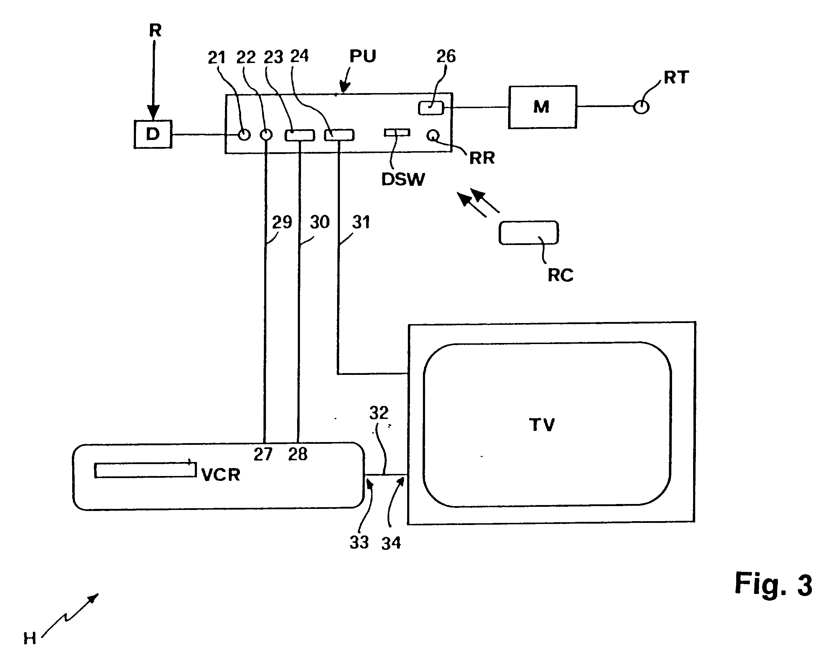

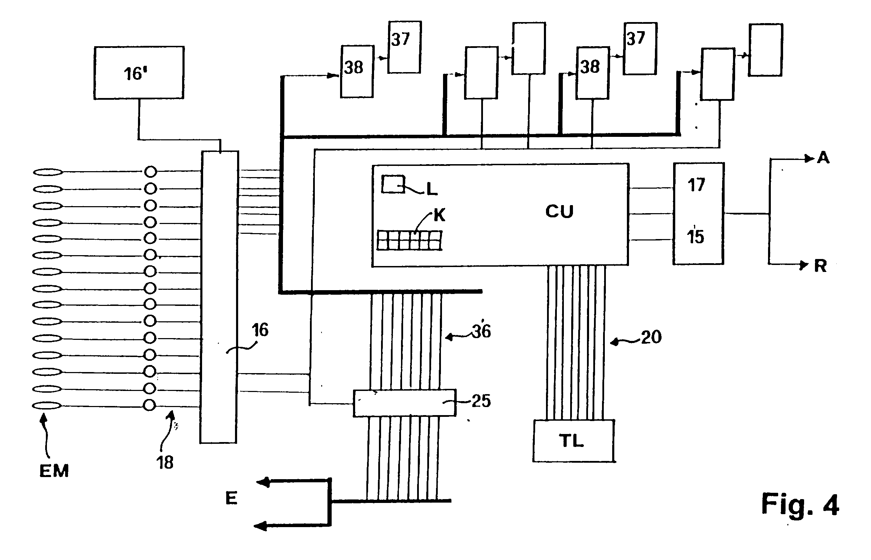

Fig. 4 shows in greater details some of the connections and components of the central unit (CU). In particular, in addition to the parts previously described, the central unit (CU) exhibits a heyboard (K) to be used by the installer, and a series of displays (37), each being provided with relevant connection element (38), for the visualization of the operating conditions of the system, that is, of the use being made of the various satellite receivers (SR). Block (16') in the same figure represents a carrier generator able to transmit the signal routed to the satellite receivers (SR) via the emitters (EM) connected to the cable (18).
As set forth above, the network (R) connects the top terminal (T) with the various audiovisual terminals (H) provided in correspondence of each user. Fig. 3 shows one embodiment of the audiovisual terminal (H).
The terminal (H) comprises a peripheral control unit (PU) bidirectionally connected to the distribution network (R) via a first gate (21). The peripheral control unit (PU) comprises a second gate (22) connectable via a coaxial cable (29) to the input gate of the antenna (27) of a video recorder (VCR). The peripheral control unit (PU) has a pair of SCART gates (23) and (24) intended for connection, via respective cables (30) and (31), to corresponding SCART gates (28) and (35) provided on the video recorder (VCR) and on a television set (TV); the latter result connected to each other by a coaxial cable (32) disposed between the two respective antenna gates (33) and (34).

Also provided on the peripheral control unit (PU) is a signal receiver (RR) associated to a relevant telecontrol (RC) of IR type, for esample. Again, present on the peripheral control unit (PU) is a gate apt for connection (26) with a telephone network (RT) via a peripheral telephone interface provided with a relevant modem (M). Finally, a local switch (DSW) is provided, allowing the central unit (CU) to identify the individual peripheral unit (PU) , as will be described later on.

By acting, upon the installation stage, on the safety switch (L) makes it possible to allocate a predetermined code to the various users of the reception system in question. The safety switch (L) may be disposed either in unlocked or locked position. Upon the installation, with the switch (L) in unlocked position, the installer acts on the local switch (DSW) of the individual peripheral unit (PU) to assign the latter a predetermined value or number allowing it to be identified by the central unit (CU). The assignment of the user's identification number determines the correlation of the relevant peripheral unit (PU) with a corresponding satellite receiver (SR) and with the encoder-modulator (E) connected thereto. In other words, under normal operating conditions of the plant, each linked user is identified by a code that cannot be changed, as the local switch (DSW) present on the peripheral units (PU) is not active when the switch (L) of the central unit (CU) is in locked position. The user's code is utilized by the central unit (CU) to operate the various satellite receivers (SR) associated to corresponding encoders-modulator (E), as will be described below.

The satellite signals coming in from the antenna (A1) are transformed by the converters (LNB) into intermediate-frequency signals (IF) and fed to the various satellite receivers (SR). At the output (6), each of the satellite receivers (SR) sends a composite video signal at low frequency to the corresponding encoder-modulator device (E). In other words, an output signal is emitted by the satellite receivers (SR) which is able to be received by a normal television set, as the receivers in question are of known type, that is, to be used directly connected to a TV set. The satellite receivers (SR) are remote-opereable, as the central control unit (CU), connected thereto via the cable (18) and the emitters (EM), is able to transmit to them the signals coming from the various telecontrols (RC) in a manner to be described later.
The signal on output from the satellite receivers (SR) reaches the encoders-modulators (E) which, under control of the central unit (CU) according to the allocated user's code, associate to each signal a fixed frequency ranging, from example, in the range of 150 to 460 MHz. Moreover, the signal is temporaly devoid of the synchro pulses or the same pulses are suitably modified. In other words, the input signal from the encoders-modulators (E) is modulated on a fixed frequency in order to assign a frequency to each user, and is modified in the synchronisms to allow the vision of the program only by the user provided with a peripheral unit (PU) suited for re-establishing the synchronisms in a way corresponding to the user's code.
The thus modified signal outputting from the encoders-modulators (E) is fed to the amplifier (A) where it is mixed with the earth television signal coming from the antenna (A2) and transmitted afterwards, via the output (17) of the central units (CU), to the distribution network.
The lead-in signal arrives at the peripheral units (PU), being tuned on the frequencies indicated by the central unit (CU), and is decoded to bring the synchro pulses back to the previous state.
As set forth above, the satellite receivers (SR) are operated by the users who act locally on the telecontrol (RC). To this end, provision is made for an information transmission protocol between the central unit (CU) and the various peripheral units (PU) with the use of the same coaxial cable of the network (R) and with no need, therefore, of a dedicated network nor of the supply mains. The protocol may be of time-multiplexing type in which, for example, series of signals are transmitted being subdivided into time slots.

In case of users provided with 15 peripheral units (PU), there will be used a frame containing 16 time slots for the 15 users plus the central unit which provides also for the clock signal.
By way of experiment, in the non-limiting case of 15 users, significantly advantageous results have been obtained by using a transmission protocol with a frame lasting 489.6 microseconds, with 16 time slots of 30.6 microseconds. The time slot relevant to the individual user may contain, between the START and STOP signals, 9 bits of data relevant to any possible IR signal emitted by the telecontrol (RC) and received by the peripheral unit (PU). In particular, the 9 data may correspond to 9 samplings of IR signals homogeneously collected during the transmission of the preceding frame. In practice, during the time relevant to the transmission of a frame, equal to 489.6 microseconds, 9 samplings are carried out by the peripheral unit (PU), that is, one sampling every 54.4 microseconds, with a frequency amounting to 18382 Hz. Since the period of detection of the telecontrol's signals is higher than the duration of the time slot of the individual user (54.6 > 30.6 microseconds), during the delivery of data on the coaxial cable of network (R) no samplings are carried out by the peripheral unit (PU). The data received by the central unit will also serve to operate the various satellite receivers (SR) by utilizing the emitters (EM) as they were telecontrols directly activated by the users.

As far as the time slot relevant to the central unit (CU) is concerned, the protocol may provide the cyclic delivery of identifying data and signals by the same unit (CU). For example, a protocol may adventageously used which provides for repeating, upon each frame or every 3 ms approximately, the following sequence (not to be considered in a limitative sense): 0X0A5 (SYNC), 0X0A5 (SYNC), COMMAND, DATA 1, DATA 2, DATA 3. The first two values are at high frequency (for example "010100101") and, as they cannot come from an IR cell, identify the central unit (CU) for certain. The third value, COMMAND, signals the destination of data contained in the subsequent values (DATA 1, DATA 2, DATA 3) to the various users by giving information about the status of the central switch (L), that is, whether the latter is in unlocked or locked position.

In practice, the central unit (CU) informs on the type of message to be sent afterwards and on the relevant destination either for indivudual users or for all of them. DATA 1 may contain the user's code, and DATA 2 and DATA 3 may contain the relevant frequency to be set locally. In this way, a bidirectional transmission is set up, between the central unit (CU) and the various peripheral units (PU), which utilizes the coaxial cable of the network (R), this cable being possibly, advantageously, the one existing prior to the installation of the satellite reception plant, that is, the traditional cable for the distribution of earth television signals.

The third value COMMAND is also able to signal the state of engagement of the telephone line. As previously mentioned, the system illustrated in the examples is advantageously provided with a telephone interface comprising, in particular, the group of main telephone interface (TL), in correspondence of the top terminal (T), the peripheral telephone interface (M) and the gate for telephone connection (26), in correspondence of the user terminal (H).
In case of services such as "pay per view", "video on demand", etc., it may be necessary that the user will contact by telephone the dealer of one of this services. The system is able to exchange transmission and reception signals, via the coaxial cable of network (R), by temporaly modifying the standard transmission protocol above described.

In practice, by means of the COMMAND signal, the central unit (CU) is able to communicate to the users about the establishment of a second, or "telephone", protocol to be remained in force until, again by means of a COMMAND signal, the standard protocol is re-established. During the enforcement of the telephone protocol, priority will be given to the transmission between the peripheral unit (PU) of interest and the central unit (CU), by temporaly excluding the other peripheral units (PU).

## Claims

1. Cemtral satellite reception plant comprising at least one antenna (A1), connected to a distribution network (R) via a top terminal (T) provided with a plurality of satellite receivers (SR), one for each user (H), provision being also made for a central control unit (CU) located in correspondence of said top terminal (T) and a plurality of peripheral control units (PU) located in correspondence of said users (H) and connected to said central unit (CU) via said distribution network (R), characterized in that it comprises means for coding (E) the signal outputted from said satellite receivers (SR), correlated to corresponding decoding means disposed in correspondence of said peripheral control units (PU), so as to associate a coded signal to each user (H), said signal being able to be decoded only by the corresponding peripheral unit (PU).

2. Cemtral satellite reception plant comprising at least one antenna (A1), connected to a distribution network (R) via a top terminal (T) provided with a plurality of satellite receivers (SR), one for each user (H), provision being also made for a central control unit (CU) located in correspondence of said top terminal (T) and a plurality of peripheral control units (OU) located in correspondence of said users (H) and connected to said central unit (CU) via said distribution network (R) , characterized in that it comprises means for connection to a telephone network (RT) which are made up of at least one peripheral telephone interface (M) able to connect one of said peripheral units (PU) to the telephone network (RT), and of a main telephone interface (TL) associated to said central unit (CU) and connected to the peripheral unit (PU) via the same distribution network (R).

3. Plant according to claim 1, characterized in that said means for coding the signal are made up of a plurality of encoder-modulator devices (E), one for each of said satellite receivers (SR), able to modify the relevant received signal at least for the part relating to the synchronisms and according to a different procedure for each satellite receiver (SR).

4. Plant according to claim 1, characterized in that between said central unit (CU) and said satellite receivrs (SR) there are disposed and act a plurality of emitters (EM) operable by the central unit (CU) and apt to emulate the corresponding telecontrol device provided for each satellite receiver (SR), and in that each of said peripheral units (PU) is provided with means (RR) able to detect signals for operating said satellite receivers (R) and to put on said network (R), in correspondence of the detected signals, corresponding signals receivable from said central unit (CU).

5. Plant according to claim 1 characterized in that said central unit (CU) and said peripheral units (PU) are provided with means able to bidirectionally put, on said distribution network (R), information signals of time-multiplexing type according to at least one transmission protocol.

6. Plant according to claims 2 and 5, characterized in that said central unit (CU) and said peripheral units (PU) operate according to at least two transmission protocols, one protocol relating to the exchange of signals being mainly able to allow for the distribution of the television signal, and the other relating, at least in part, to the transmission of a telephone signal.

7. Plant according to claim 1, characterized in that it comprises means for connection to a telephone network (RT) which consist of at least one peripheral telephone interface (M) able to connect one of said peripheral units (PU) to the telephone network (RT), and of a main telephone interface (TL) associated to said central unit (CU) and connected to the peripheral unit (PU) via the same distribution network (R).

8. Plant according to claim 2, characterized in that it comprises means for coding (E) the signal outputted from said satellite receivers (SR), correlated to corresponding decoding means disposed in correspondence of said peripheral control units (PU), so as to associate a signal to each user (H), which signal is able to be decoded only by the corresponding peripheral unit (PU).

9. Plant according to any of the preceding claims, characterized in that said distribution network (R) consists of a coaxial cable for broadcasting low-frequency television signals.

10. Apparatus for use, in particular, in association with a cemtral satellite reception plant comprising one or more antennae (A1) connected to a distribution network (R) via a top terminal (T) provided with a plurality of satellite receivers (SR), one for each user (H), apparatus of a type made up of a central control unit (CU), disposed in correspondence of said top terminal (T), and of a plurality of peripheral control units (PU) disposed in correspondence of said users (H) and connected to said central unit (CU) via said distribution network (R), apparatus characterized in that said central control unit (CU) is provided with, or is connectable to means for coding (E) the signal outputted from said satellite receivers (SR) and that said peripheral control units (PU) are provided with corresponding decoding means, so as to associate a coded signal to each user (H), said signal being able to be decoded only by the corresponding peripheral unit (PU).

11. Apparatus for use, in particular, in association with a cemtral satellite reception plant comprising one or more antennae (A1) connected to a distribution network (R) via a top terminal (T) provided with a plurality of satellite receivers (SR), one for each user (H), apparatus of a type made up of a central control unit (CU), disposed in correspondence of said top terminal (T), and of a plurality of peripheral control units (PU) disposed in correspondence of said users (H) and connected to said central unit (CU) via said distribution network (R), apparatus characterized in that at least one of said peripheral units (PU) comprises means for connection to a telephone network (RT) made up of at least one peripheral telephone interface (M) able to connect one of said peripheral units (PU) to the telephone network (RT), said central control unit (CU) being provided with a relevant main telephone interface (TL) connected to said peripheral unit (PU) via the same distribution network (R).

12. Apparatus according to claim 10, characterized in that said means for coding the signal are made up of a plurality of encoder-modulator devices (E), one for each of said satellite receivers (SR), able to modify the relevant received signal, at least for the part relating to the synchronisms, according to a different procedure for each satellite receiver (SR).

13. Apparatus according to claim 10, characterized in that between said central unit (CU) and said satellite receivrs (SR) there are disposed and act a plurality of emitters (EM) operable by the central unit (CU) and apt to emulate the corresponding telecontrol device provided for each satellite receiver (SR), and in that each of said peripheral units (PU) is provided with means (RR) able to detect signals for operating said satellite receivers (SR), and to put on said network (R), in correspondence of the detected signals, corresponding signals receivable from said central unit (CU).

14. Apparatus according to claim 10, characterized in that said central unit (CU) and said peripheral units (PU) are provided with means able to bidirectionally put, on said distribution network (R), information signals of time-multiplexing type according to at least one transmission protocol.

15. Apparatus according to claims 11 and 12, characterized in that said central unit (CU) and said peripheral units (PU) operate according to at least two transmission protocols, one protocol relating to the exchange of signals being mainly able to allow for the distribution of the television signal, and the other relating, at least in part, to the transmission of a telephone signal.

16. Apparatus according to claim 10, characterized in that at least one of said peripheral units (PU) comprises means for connection to a telephone network (RT) which are made up of at least one peripheral telephone interface (M) able to connect the peripheral unit (PU) to the telephone network (RT), said central unit (CU) being provided with a relevant main telephone interface (TL) connected to said peripheral unit (PU) via the same distribution network (R).

17. Apparatus according to claim 11, characterized in that said central control unit (CU) is provided with, or is connectable to means for coding (E) the signal outputted from said satellite receivers (SR) and that said peripheral control units (PU) are provided with corresponding decoding means, so as to associate a coded signal to each user (H), said signal being able to be decoded only by the corresponding peripheral unit (PU).

18. Apparatus according to any of the preceding claims, characterized in that said distribution network (R) consists of a coaxial cable for low-frequency television broadcasting.

19. Method of distributing a satellite television signal, in particular within a central satellite reception plant wherein provision is made for transforming a satellite signal on input to an antenna (A1) into an intermediate-frequency signal (IF), delivering the intermediate-frequency signal (IF) to a plurality of satellite receivers (SR), one for each user (H), and feeding the signals on output from said satellite receivers (SR) to a corresponding plurality of users (H) via a single-cable distribution network (R), method characterized in that it codes signals outputted from said satellite receivers (SR) and decodes them by means of a plurality of peripheral control units (PU) connected to said network (R) and disposed in correspondence of said peripheral control units (PU), so as to associate a coded signal to each user (H), which signal is able to be decoded only by the corresponding peripheral unit (PU).

20. Method of distributing a satellite television signal, in particular within a central satellite reception plant wherein provision is made for transforming a satellite signal on input to an antenna (A1) into an intermediate-frequency signal (IF), delivering the intermediate-frequency signal (IF) to a plurality of satellite receivers (SR), one for each user (H), and feeding the signals on output from said satellite receivers (SR) to a corresponding plurality of users (H) via a single-cable distribution network (R), method characterized in that it uses said distributing network for the transmission of telephone signals by connecting at least one of said users (H) to a telephone network (RT) via a peripheral interface (M), provided in correspondence of one of said users (H), and associating to said network (R) a main telephone interface (TL) connected, through a central control unit (CU), to said satellite receivers (SR).

21. Method according to claim 19, characterized in that it modifies the signals emitted by said satellite receivers (SR) at least for the part relating to the synchronisms.

22. Method according to claim 19, characterized in that it detects, in correspondence of the users (H) and by means of said peripheral units (PU), signals for operating said plurality of satellite receivers (SR) so as to drive the latter through a corresponding plurality of emitters (EM) suitable for emulating the corresponding telecontrol device provided for each satellite receiver (SR), said emitters being connected to said network (R) via a central control unit (CU).

23. Method according to claim 19, characterized in that it uses said network (R) to bidirectionally put thereon, by means of said peripheral units (PU) and with a central control unit (CU) connected to said satellite receivers (SR), information signals of time-multiplexing type according to at least one transmission protocol.

24. Method according to claims 20 and 23, characterized in that said central unit (CU) and said peripheral units (PU) operate according to at least two transmission protocols, one protocol relating to the exchange of signals being mainly able to allow for the distribution of the television signal, and the other relating, at least in part, to the transmission of a telephone signal.

25. Method according to claim 19, characterized in that it uses said network (R) for the transmission of telephone signals by connecting at least one of said users (H) to a telephone network (RT) via a peripheral interface (M), provided in correspondence of one of said users (H), and associating to said network (R) a main telephone interface (TL) connected, through a central control unit (CU), to said satellite receivers (SR).

26. Method according to claim 20, characterized in that it codes signals outputted from said satellite receivers (SR) and decodes them by means of a plurality of peripheral control units (PU) connected to said network (R) and disposed in correspondence of said peripheral control units (PU), so as to associate a coded signal to each user (H), said signal being able to be decoded only by the corresponding peripheral unit (PU).

27. Method according to claims 19 and 26, characterized in that said said distribution network (R) consists of a coaxial cable for broadcasting low-frequency television signals.
